# EUROPEAN PATENT SPECIFICATION

(11) **EP 1 372 953 B1**
(45) Date of publication and mention of the grant of the patent: **19.12.2007**
(21) Application number: 02705658.9
(22) Date of filing: 15.03.2002
(51) Int. Cl.: B32B 15/08, C08K 7/22

(54) **METAL-COMPOSITE LAMINATES AND A METHOD FOR FABRICATING SAME**
METALLVERBUNDWERKSTOFFLAMINATE UND VERFAHREN ZUR HERSTELLUNG DERSELBEN
LAMINES METAL-COMPOSITE ET PROCEDE DE FABRICATION DE CEUX-CI

(30) Priority: 30.03.2001 SE 0101129
(43) Date of publication of application: 02.01.2004
(73) Proprietor: SAAB AB, 581 88 Linköping (SE)
(72) Inventor: HANSSON, Jan, S-585 93 Linköping (SE)
(74) Representative: Holmberg, Magnus
(86) International application number: PCT/SE2002/000496
(87) International publication number: WO 2002/078951

(56) References cited:
- EP-A- 0 312 151
- GB-A- 1 303 301
- US-A- 5 275 875
- US-A- 5 429 326
- US-A- 5 547 735
- US-A- 6 114 050

## Description

This invention concerns a method for fabricating fiber-reinforced metal-polymer laminates, referred to hereinafter as metal-composite laminates, that exhibit an extremely advantageous relationship between mechanical properties and specific gravity. The invention also includes the laminates fabricated in accordance with said method.

Laminates consisting of two or more metal layers or foils joined by means of a composite layer in the form of a polymerized binder and various types of fiber reinforcement have been tested in many contexts where a need has been found to improve the fatigue strength of the metallic base material. The strengths and weakness of the metallic base material and the fiber-reinforced composites offset one another. Metallic materials are weak at geometric notches (stress concentrations) in connection with fluctuating loads, while this is the strength of the composite; the composite is conversely sensitive to geometric notches under static loads as a result of its brittleness, while the metal is capable of plastic deformation.

Reinforcements for metallic material structures that have sustained cracking in service have consequently, to some extent, already been subject to repair by, e.g. adhesively applying a composite patch, since the composite is insensitive to fluctuating loads and will thus relieve the area and prevent the cracking from extending further.

By combining the positive properties of the metal and the composite, it has been possible to produce metal-composite laminates that have begun to be used to an ever-increasing extent in aviation and aerospace technology, where they have been replacing more and more metal structures for a number of years, since these laminates can provide products with better strength properties at lower weight, even though they also entail a higher price. These laminates generally consist of two, three or more metal layers held together by polymeric binder layers, which are usually reinforced with some type of fiber material such as glass, aramid or carbon fiber. Various types of polymers have been used as binders for this purpose; thermoplastics may have dominated initially, but today different types of epoxides are generally more prevalent.

One such metal-composite laminate that is commonly used in the aviation industry is known as GLARE®, which refers primarily to thin aluminum plates and fiberglass prepreg, thus providing a material that performs well under repeated stresses, and in which cracks grow slowly.

Because it has proven possible to produce metal-composite laminates with such advantageous properties, a great deal of work has been done in recent years to further improve these materials. As a result, there is a fairly large number of patents in this field.

For example, EP 0013146 describes a metal-composite laminate consisting of two thin metal surface layers joined by means of an adhesive layer of thermoplastic, wherein the adhesive layer may also contain filler material such as glass fiber. However, this laminate, which is described as being intended primarily for making different types of panels for the automotive industry, is unsuitable for use at high temperature, since the adhesive consists of a thermoplastic; the glass fiber added to the adhesive layer is at the same time assumed to consist of short, unattached fibers so as to yield a material that is sufficiently deformable for the intended purpose, but these fibers fail, because of their short common length, to give the laminate the improved properties that would be desirable for many other applications.

DE 2,642,882 describes an armor material consist of at least one steel plate coated with multiple layers of a /*sic*/ thermoplastic polyamide and aramid fibers.

US 4,035,694 concerns an electrically conductive metal layer coated with polymeric binder and a non-woven material containing aromatic polyamide fibers, among others. However, this laminate is intended for use in making printed circuits, and was never intended to absorb heavy mechanical loads.

GB 1,303,301 describes a metal-composite material consisting of multiple metal layers joined together by means of fiber-reinforced plastic material, where the fiber material is said to potentially consist of carbon and/or glass fibers. Major emphasis is placed in this patent on how the fibers are oriented, and the patent thus also includes a description of a device for stretching the fibers in each particular direction.

Finally, US 3,321,019 describes a helicopter rotor propeller that is partly reinforced with aluminum plates and fiberglass fabric. The patent thus does not actually describe a generally applicable material, but rather a specific product.

US 4,489,123 also describes a metal-composite laminate of thin aluminum layers and a composite layer containing continuous fibers of aramid or carbon fibers, plus a polymeric thermoplastic binder. The aluminum layer incorporated in the laminate is said to measure from 0.1 to less than 1 mm in thickness, while the fiber material according to claim 1 must consist of an aromatic polyamide fiber containing poly-paraphenylene terephthalamide yarn in long lengths and with a stiffness of 50,000 - 250,000 Mpa. These broad limits with respect to fiber rigidity naturally raise certain questions as to what is actually intended, and whether any aramid fibers exist that cover this entire range. On the other hand, claim 15 cites limits of 100,000 to 150,000, which indicates that carbon fiber is intended. Carbon fiber is also cited in the abstract on page 1 of the patent, but not in the claims. (E-glass with ca. 70,000 Mpa and S-glass with ca. 85,000 Mpa would thus fall within the limits set forth in claim 1, assuming that the chemical definition in claim 1 could be considered to include these products). The most specific attribute of the laminate defined in this patent otherwise appears to be that the metal layers incorporated in the laminate would, in a completely unloaded laminate, be subjected to a certain compressive force, while the polymeric layer would simultaneously be subjected to a tensile or ductile load.

US 4,500,589 describes the same product as US 4,489,123, with the difference that, from the same starting materials, a product is produced that is free of the intrinsic prestresses that characterize the product according to US 4,500,589.

US 5,039,671 further describes a variant of essentially the same product as the two products described above, but with the difference that the fiber material in the laminate is replaced with so-called S-glass, whose modulus of elasticity is given to be 80, 000 - 100,000 Mpa, and whose elongation at break is 4 - 6%. According to the patent, the S-glass fiber gives much better "blunt notch strength", which refers to the static strength of the material with a geometric notch such as, e.g. a hole.

A great deal has thus been accomplished in the field of metal- composite laminates, and the material types each have their familiar areas of application within which their higher price in comparison with pure metals is clearly justified.

However, demands in terms of performance are constantly increasing in the field of aviation and aerospace, insofar as purely physical aircraft performance is advancing in the military sphere, while the civilian sphere is concerned mainly with the need to improve product profitability. Because the heaviest costs in civil aviation are fuel costs, the aim there is to reduce the costs per air kilometer and kilogram. For this reason, efforts are continuously underway to produce aircraft materials that are lighter but do not diminish performance, while at the same time avoiding increases in material costs beyond acceptable levels.

We have now found that, simply by making small changes in the essentially well established current technology, it is possible to produce metal- composite laminates that have essentially the same strength and other mechanical properties as current products, but are 5% or more lighter. Given that, as noted above, fuel costs comprise the largest single operating cost in civil aviation, a weight reduction of 5% in, e.g. the fuselage panels offers clear advantages, since each kilo of weight saved in the airplane itself can be replaced with an equal weight of paying cargo.

The present invention relates to a method for reducing the weight of metal-composite laminates that consist of two or more metal foil layers (1) and polymeric binder layers (2) that hold the metal foil layers together and contain fiber reinforcement (3) designed in view of the intended area of application for the product, wherein a fiber material that consists at least in part of hollow fibers, i.e. consists of tubular fibers, each of which contains at least one longitudinal internal hollow channel, is chosen for making the fiber reinforcements (3).

Further, the invention relates to a metal-composite laminate of the type that contains at least two metal foil layers (1) joined by means of fiber-reinforced polymeric binder layers (2), wherein the binder-reinforcing fiber material (3) consists at least in part of a hollow fiber material, which means that each fiber has a tubular shape and exhibits at least one throughpassing channel or opening; extending in its longitudinal direction.

The basic idea behind the invention is that at least a part of the fiber material used to reinforce the metal composite must consist of hollow fiber, which refers here to a fiber material in which each fiber exhibits one or more longitudinal and throughpassing channels, i.e. each fiber has a tubular shape. On the other hand, the chemical composition of the hollow fiber is not critical to the invention per se. The base material in the hollow fiber can thus consist of any of the previously known types of fiber materials used for corresponding purposes, but it could also
consist of an entirely new type of fiber material that is currently unknown, subject however to the condition that it meets the necessary requirements in terms of stiffness and breaking strength, and exhibits satisfactory adhesion to relevant binders.

Replacing the previously used homogenous fiber material with hollow fiber material yields a weight savings equivalent to the volume of fiber material that, in the hollow fiber, consists of the longitudinal channels in the fiber, while the advantages of the tubular shape over homogenous rods in terms of flexural rigidity, etc. are at the same time fully realized.

One advantage in this context is that certain hollow fiber materials that could be used when the invention is put into practical use are already available on the market, and most of these existing hollow fiber materials have not currently found any major uses other than in certain special applications. The hollow fiber materials that have found the largest market today are of the textile types used as thermal insulation in sleeping bags and thermal garments. Certain hollow polymeric fibers are used commercially to separate gases by exploiting osmotic pressure differences. Hollow carbon fibers have also been produced experimentally for the purpose of increasing the pressure resistance of products made from them, but hollow carbon fibers do not appear to have found any broader applications. Hollow S-glass fiber is also commercially available under the name HOLLERS, but this fiber, which has good dielechric properties, is currently used mainly in the construction of radomes.

As noted above, the hollow fibers that characterize the invention can be made from a number of different base materials that are used for similar purposes in the form of homogenous fibers, while all the previous binders that could conceivably have been used to produce composites can, at the same time, also be used in realizing the invention. However, in the preponderance of cases, binders of the epoxy type would be preferable over, e.g. thermoplastics, just as fiber reinforcements consisting at least in part of glass fiber may be expected to yield the highest quality metal-composite laminates.

Just as the choice of chemical composition for the fiber material and the binder component may
be made freely, so too is the type of metal foils used in the finished product also not critical. However, since the invention mainly concerns, in terms of its result, a method for reducing the weight of the final product, we may well expect that aluminum, aluminum alloys and titanium or titanium alloys will predominate as the most suitable metal foil materials. It may also be worth noting in this context that finished products fabricated according to the invention will, despite multiple layers of both metal and composite, often be of a thickness that falls within the range of from less than 1 mm to 2 - 3 mm. As is the case with other similar materials, the composite layers, i.e. the binder plus the fiber reinforcement, are generally thinner than the metal foils.

The meal foil layers, included in the metal-composite laminate according to the invention may have a thickness withing the range from 0.1 to ≤ 1mm, while each respective polymeric layer (2), including the fiber reinforcement (3) contained therein, has a thickness that never attains the thickness of its respective adjacent metal layer (1).

The reinforcement fibers (3) contained in the metal-composite laminate may consist at least in part of tubular carbon fibers. Further, the reinforcement fibers (3) contained in the metal composite laminate may consits at least in part of tubular E- or S-glass fibers.

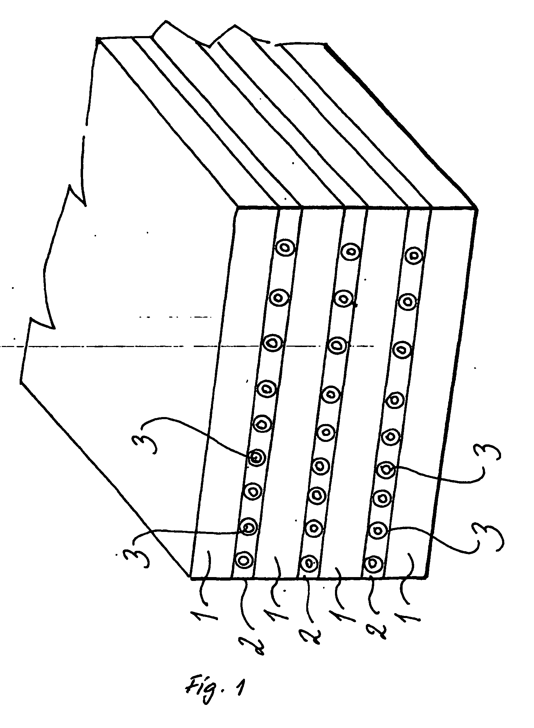

The invention is illustrated in a purely general way in the accompanying figure, which shows an oblique projection of a piece of material fabricated according to the invention, and is defined in the subsequent claims.

In the laminate shown in the figure, 1 designates the metal foil layers, 2 the binders and 3 the reinforcements in the form of hollow fiber material, which can be arranged in a manner that is known per se in the form of a fabric, or as endless fiber loops that are stretched randomly or in extremely well-ordered, predetermined courses.

## Claims

1. A method for reducing the weight of metal-composite laminates that consist of two or more metal foil layers (1) and polymeric binder layers (2) that hold the metal foil layers together and contain fiber reinforcement (3) designed in view of the intended area of application for the product, **characterized in that** a fiber material that consists at least in part of hollow fibers, i.e. consists of tubular fibers, each of which contains at least one longitudinal internal hollow channel, is chosen for making the fiber reinforcements (3).

2. A metal-composite laminate of the type that contains at least two metal foil layers (1) joined by means of fiber-reinforced polymeric binder layers (2), **characterized in that** the binder-reinforcing fiber material (3) consists at least in part of a hollow fiber material, which means that each fiber has a tubular shape and exhibits at least one throughpassing channel or opening extending in its longitudinal direction.

3. A metal-composite laminate according to claim 2, **characterized in that** the metal foil layers (1) included therein have a thickness within the range from 0.1 to ≤ 1 mm, while each respective polymeric layer (2), including the fiber reinforcement (3) contained therein, has a thickness that never attains the thickness of its respective adjacent metal layer (1).

4. A metal composite laminate according to claim 2 or 3, **characterized in that** the reinforcement fibers (3) contained therein consist at least in part of tubular carbon fibers.

5. A metal-composite laminate according to either of claims 2 or 4, **characterized in that** the reinforcement fibers (3) contained therein consist at least in part of tubular E- or S-glass fibers.

## Patentansprüche

1. Verfahren zum Verringern des Gewichtes von Metall-Verbund-Laminaten, die aus zwei oder mehr Metallfolienschichten (1) und Polymer-BindemittelSchichten (2) bestehen, die die Metallfolienschichten zusammenhalten und Faserverstärkung (3) enthalten, die unter Berücksichtigung des beabsichtigten Einsatzgebietes für das Erzeugnis gestaltet ist, **dadurch gekennzeichnet, dass** ein Fasermaterial, das wenigstens teilweise aus hohlen Fasern besteht, d.h. aus röhrenförmigen Fasern besteht, von denen jede wenigstens einen inneren hohlen Längskanal enthält, zur Herstellung der Faserverstärkung (3) ausgewählt wird.

2. Metall-Verbund-Laminat des Typs, das wenigstens zwei Metallfolieschichten (1) enthält, die mittels faserverstärkter Polymer-Bindemittelschichten (2) verbunden sind, **dadurch gekennzeichnet, dass** das Material (3) aus Bindemittel und verstärkender Faser wenigstens teilweise aus einem hohlen Fasermaterial besteht, d.h. dass jede Faser eine Röhrenform hat und wenigstens einen durchgehenden Kanal bzw. eine Öffnung aufweist, der/die in ihrer Längsrichtung verläuft.

3. Metall-Verbund-Laminat nach Anspruch 2, **dadurch gekennzeichnet, dass** die Metallfolienschichten (1), die darin enthalten sind, eine Dicke im Bereich von 0,1 bis ≤ 1 mm haben, wobei jede jeweilige Polymerschicht (2) einschließlich der darin enthaltenen Faserverstärkung (3) eine Dicke hat, die in keinem Fall die Dicke ihrer jeweiligen angrenzenden Metallschicht (1) erreicht.

4. Metall-Verbund-Laminat nach Anspruch 2 oder 3, **dadurch gekennzeichnet, dass** die Verstärkungsfasern (3), die darin enthalten sind, wenigstens teilweise aus röhrenförmigen Kohlefasern bestehen.

5. Metall-Verbund-Laminat nach den Ansprüchen 2 oder 4, **dadurch gekennzeichnet, dass** die Verstärkungsfasern (3), die darin enthalten sind, wenigstens teilweise aus röhrenförmigen E- oder S-Glasfasern bestehen.

## Revendications

1. Méthode de réduction du poids de laminés métal-composite qui consiste en deux ou plusieurs couches de feuilles métalliques (1) et de couches de liant polymère (2) qui maintiennent les couches de feuilles métalliques entre elles et contiennent un renfort de fibre (3) conçu en tenant compte du domaine d'application voulu pour le produit, **caractérisé en ce qu'**un matériau fibreux qui comprend au moins en partie des fibres creuses, c'est-à-dire, constitué de fibres tubulaires, chacune desquelles contient au moins un canal creux interne longitudinal, est choisi pour la fabrication de renforts de fibre (3).

2. Laminé métal-composite du type comprenant au moins deux couches de feuilles métalliques (1) reliées au moyen de couches de liant polymère renforcées par des fibres (2), **caractérisé en ce que** le matériau fibreux de renfort du liant (3) est constitué d'au moins en partie d'un matériau fibreux creux, ce qui signifie que chaque fibre a une forme tubulaire et présente au moins un canal ou une ouverture traversant s'étendant dans sa direction longitudinale.

3. Laminé métal-composite selon la revendication 2, **caractérisé en ce que** les couches de feuilles métalliques (1) comprises ici ont une épaisseur allant de 0,1 à ≤ 1 mm, tandis que chaque couche polymère respective (2), dont le renfort de fibre (3) contenu ici, a une épaisseur qui n'atteint jamais l'épaisseur de sa couche métallique adjacente respective (1).

4. Laminé métal-composite selon la revendication 2 ou 3, **caractérisé en ce que** les fibres de renfort (3) contenues ici sont constituées au moins en partie des fibres de carbone tubulaires.

5. Laminé métal-composite selon les revendications soit 2 soit 4, **caractérisé en ce que** les fibres de renfort (3) contenues ici sont constituées au moins en partie des fibres de verre-S ou -E tubulaires.
